Europäisches Patentamt

European Patent Office

Office européen des brevets

(19)

(11) Numéro de publication : **0 360 634 B1**

(12) **FASCICULE DE BREVET EUROPEEN**

(45) Date de publication du fascicule du brevet :
27.05.92 Bulletin 92/22

(51) Int. Cl.⁵ : **F16L 37/08**

(21) Numéro de dépôt : **89402221.9**

(22) Date de dépôt : **04.08.89**

(54) **Dispositif de jonction entre un raccord souple et un embout tubulaire rigide d'un circuit sous pression.**

(30) Priorité : **20.09.88 FR 8812273**

(43) Date de publication de la demande :
**28.03.90 Bulletin 90/13**

(45) Mention de la délivrance du brevet :
**27.05.92 Bulletin 92/22**

(84) Etats contractants désignés :
**DE GB IT**

(56) Documents cités :
**DE-C- 1 157 863**
**DE-C- 1 218 237**
**FR-E- 75 960**
**US-A- 2 935 349**
**US-A- 3 394 954**
**US-A- 3 588 149**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Arribard, Philippe**
**50, Allée des Mésanges**
**F-78540 Vernouillet (FR)**
Inventeur : **Liochon, Michel**
**1, Résidence Le Nouveau Parc**
**F-78570 Andresy (FR)**
Inventeur : **Massoutier, Pascal**
**19, Sente des Buis**
**F-78780 Maurecourt (FR)**
Inventeur : **Monnier, Marcel**
**1 Bis, avenue des Dahlias**
**F-78580 Maule (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un dispositif de jonction entre un raccord tubulaire souple et un embout tubulaire rigide, dans un circuit contenant en service un fluide sous pression.

Les véhicules automobiles modernes comportent un capot de plus en plus effilé en vue de l'amélioration du $C_x$ du véhicule. La place disponible sous le capot pour le radiateur est donc réduite par rapport aux véhicules plus anciens. L'eau du circuit de refroidissement est donc relativement moins refroidie sur les véhicules modernes. Cette eau se trouve, pendant la marche du véhicule, à une pression et à une température assez sensiblement supérieure à la pression et à la température de l'eau dans les circuits de refroidissement des véhicules plus anciens.

Cette augmentation de pression entraîne des risques de fuite, dans le circuit de refroidissement du véhicule, au niveau des jonctions entre les conduits de raccordement souples du circuit et les embouts de raccordement rigides, par exemple du radiateur ou du moteur.

Jusqu'ici, les conduits de raccordement ou raccords souples étaient engagés sur l'embout rigide correspondant et fixés de manière étanche sur cet embout grâce à un collier de serrage placé autour du raccord souple.

Les colliers de serrage utilisés peuvent être de types différents.

On utilise par exemple des colliers élastiques mais ces colliers n'assurent pas une très bonne étanchéité lorsque la pression dans le circuit de refroidissement est sensiblement supérieure à la pression atmosphérique. De plus, ces colliers élastiques nécessitent l'utilisation d'outils spécifiques pour leur montage et leur démontage.

On peut également utiliser des colliers de serrage à double crémaillère mais ces colliers demandent également l'utilisation d'un outillage spécifique pour leur montage et leur démontage. De plus, le démontage de tels colliers est une opération très difficile.

Il est également possible d'utiliser des colliers à vis à direction tangentielle mais ces colliers sont très difficiles à placer correctement sur le raccord et l'embout. De plus, le serrage de ces colliers ne peut pas être contrôlé visuellement.

Les dispositifs de jonction des circuits de refroidissement où les raccords souples sont enfilés sur les embouts rigides du circuit et serrés par des colliers ne donnent donc pas satisfaction dans les conditions actuelles et a fortiori dans le cas de circuits de refroidissement fonctionnant sous haute pression. De plus, ces dispositifs ne peuvent pas être montés de façon automatique.

On a proposé dans une demande de brevet Français 88-05305 déposée le 21 Avril 1988 par les Sociétés Automobiles PEUGEOT et Automobiles CITROEN, un dispositif de jonction constitué par une partie d'extrémité du raccord souple lui-même introduit à l'intérieur de l'embout rigide. La paroi du raccord souple est soumise en service à la pression du fluide sur sa face interne et se trouve ainsi appliquée de manière étanche sur la surface intérieure de l'embout rigide. On évite ainsi les inconvénients liés à l'utilisation de colliers et l'étanchéité de la jonction est d'autant meilleure que la pression du fluide en service est plus forte. Cependant, de tels dispositifs nécessitent généralement l'utilisation d'un anneau élastique qui peut être constitué par exemple par une bague métallique fendue, placé à l'intérieur du raccord souple à son extrémité de jonction. Un tel anneau est nécessaire pour éviter un affaissement du raccord et pour garantir un certain maintien de ce raccord à l'intérieur de l'embout rigide, en l'absence de pression dans le circuit de refroidissement.

Il est également nécessaire de prévoir généralement des moyens de retenue axiale du raccord souple, à l'intérieur de l'embout rigide et/ou sur la surface extérieure de ce raccord souple qui peuvent être constitués par des pièces rapportées sur les parties de jonction du raccord souple et de l'embout rigide.

Il peut en résulter des difficultés au moment du montage, dans la mesure où des pièces complémentaires doivent être prévues et placées sur les éléments à assembler.

Le montage peut également s'avérer défectueux, dans le cas où l'une de ces pièces complémentaires a pu être oubliée par le monteur.

On connaît par le US-A-3.588.149 un dispositif d'accouplement de deux canalisations comportant deux raccords souples qui peuvent être emboîtés l'un sur l'autre et qui comportent des moyens d'accrochage et des moyens d'étanchéité qui sont mis en place au moment de leur emboîtement. Un tel dispositif n'est pas applicable pour réaliser la jonction d'un raccord souple et d'un embout rigide d'un circuit sous pression.

Le but de l'invention est donc de proposer un dispositif de jonction entre un raccord tubulaire souple et un embout tubulaire rigide, dans un circuit contenant, en service, un fluide sous pression tel que le circuit de refroidissement d'un véhicule automobile, l'étanchéité de la jonction étant assurée en service par la pression du fluide s'exerçant sur une extrémité de jonction du raccord souple en contact avec l'embout rigide, ce dispositif permettant un montage extrêmement rapide et extrêmement sûr ne nécessitant l'utilisation d'aucun outillage et d'aucune pièce rapportée.

Dans ce but, le dispositif suivant l'invention comporte une pièce de raccordement solidaire du raccord souple à son extrémité de jonction comportant :

– une première lèvre d'étanchéité annulaire souple disposée pour venir à l'intérieur de l'embout rigide, sur laquelle s'applique la pression du fluide en service pour son application étanche contre la surface intérieure de l'embout rigide,

– une seconde lèvre d'étanchéité annulaire souple en contact avec la surface de l'embout rigide sur laquelle elle est appliquée de manière étanche lorsque le circuit est en dépression par rapport à l'atmosphère extérieure,

– et des moyens d'accrochage de la pièce de raccordement sur des moyens correspondants de l'embout rigide.

Afin de bien faire comprendre l'invention, on va maintenant décrire, à titre d'exemples non limitatifs, en se référant aux figures jointes en annexe, plusieurs modes de réalisation d'un dispositif de jonction suivant l'invention utilisé pour le raccordement d'un conduit souple d'un circuit de refroidissement de véhicule automobile sur un embout rigide solidaire du radiateur du véhicule.

Les figures 1, 2 et 3 sont relatives à un premier mode de réalisation du dispositif de jonction suivant l'invention.

La figure 1 est une vue en coupe axiale suivant 1-1 de la figure 2.

La figure 2 est une vue en vue frontale suivant 2 de la figure 1.

La figure 3 est une vue de dessus suivant 3 de la figure 1.

Les figures 4, 5 et 6 sont relatives à un second mode de réalisation du dispositif de jonction suivant l'invention.

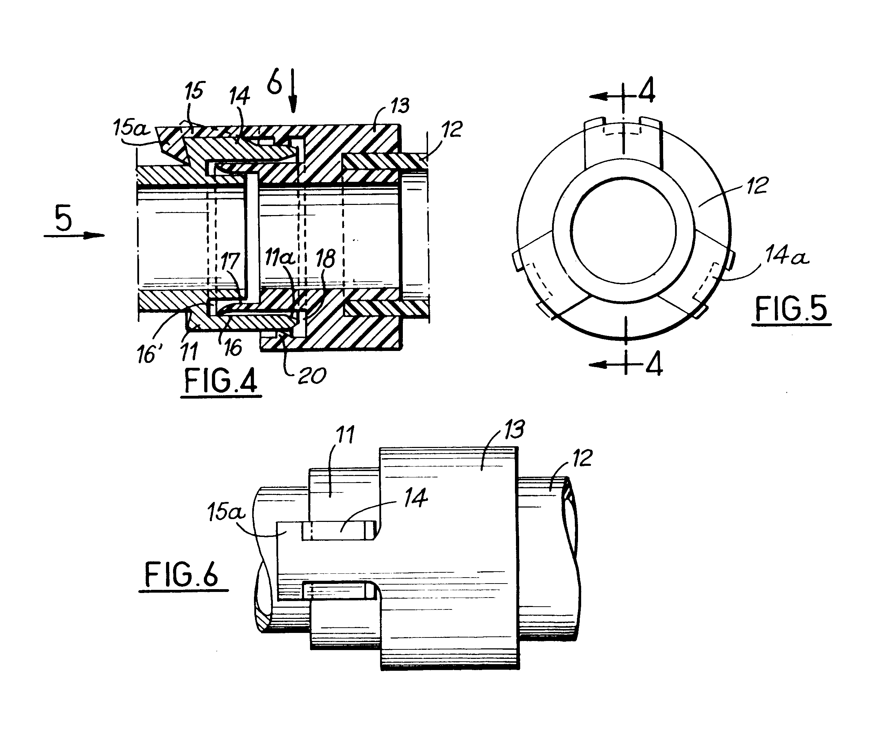

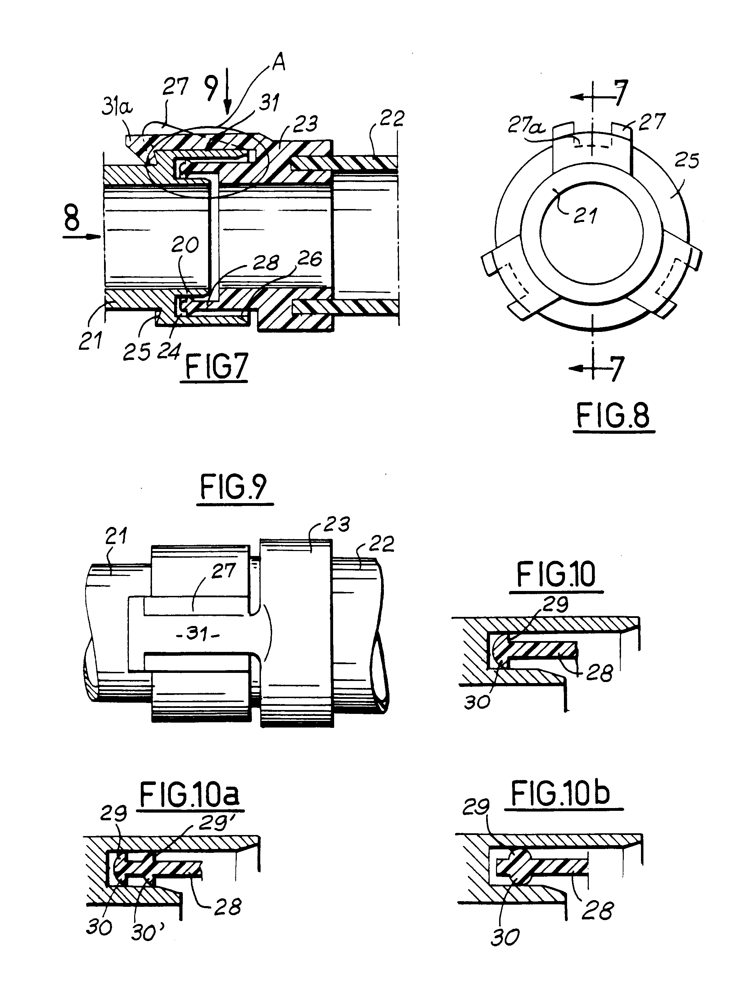

La figure 4 est une vue en coupe axiale suivant 4-4 de la figure 5.

La figure 5 est une vue frontale suivant 5 de la figure 4.

La figure 6 est une vue de dessus suivant 6 de la figure 4.

Les figures 7, 8, 9, 10, 10a et 10b sont relatives à un troisième mode de réalisation du dispositif de jonction suivant l'invention.

La figure 7 est une vue en coupe axiale suivant 7-7 de la figure 8.

La figure 8 est une vue frontale suivant 8 de la figure 7.

La figure 9 est une vue de dessus suivant 9 de la figure 7.

La figure 10 est une vue à plus grande échelle du détail A de la figure 7.

Les figures 10a et 10b représentent des variantes de réalisation du détail de la figure 10.

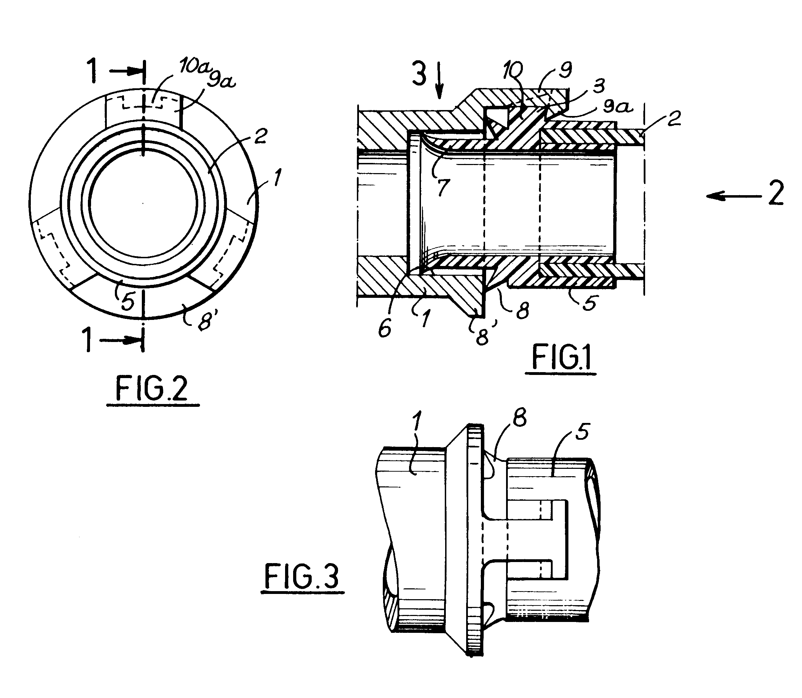

Sur les figures 1, 2 et 3, on voit une partie d'extrémité d'un embout tubulaire rigide 1 solidaire du radiateur d'un véhicule automobile.

Le dispositif suivant l'invention permet d'assurer la jonction d'un raccord souple 2 constitué par un conduit en caoutchouc du circuit de refroidissement du véhicule automobile, à l'embout rigide 1 du radiateur.

Sur la figure 1, on a représenté l'extrémité du conduit 2 venant se raccorder sur l'embout 1 par l'intermédiaire d'une pièce 3 suivant l'invention solidaire de l'extrémité de jonction du raccord souple 2.

La pièce 3 réalisée sous forme monobloc par moulage d'une matière plastique comporte un logement annulaire 5 débouchant à l'une de ses extrémités pour assurer le raccordement rigide de la pièce 3 et du raccord souple 2. Ce raccordement peut être assuré par surmoulage de la pièce 3 sur l'extrémité du raccord 2.

Le raccord 2 peut également être fixé par collage ou par soudage à l'intérieur du logement 5 réservé dans la pièce 3. On pourrait également fixer le raccord 2 à l'intérieur du logement 5, par simple engagement en force.

Dans tous les cas, la pièce 3 est rigidement solidaire de l'extrémité du raccord souple 2 et constitue avec celui-ci un ensemble inséparable, au moment du montage. La pièce 3 symétrique de révolution est montée de manière coaxiale, par rapport au raccord souple 2.

L'embout tubulaire rigide 1 présente, à l'extrémité de son alésage débouchant vers l'extérieur, une partie 6 élargie diamétralement destinée à recevoir la partie d'extrémité de la pièce 3 constituée par une lèvre d'étanchéité intérieure souple 7, de forme annulaire.

L'embout rigide 1 comporte également à son extrémité et sur sa périphérie externe un épanouissement annulaire 8' prolongé axialement par trois pattes d'accrochage 9 disposées à 120°. Les pattes d'accrochage 9 sont destinées à coopérer, au moment du montage, avec trois parties 10 en saillie radiale prévues sur la pièce 3 dans des positions correspondantes, c'est-à-dire réparties à 120° autour de la pièce 3.

Chacune des pattes 9 comporte une griffe d'accrochage 9a à son extrémité dirigée radialement et vers l'intérieur.

Chacune des parties en saillie 10 de la pièce 3 comporte deux flancs latéraux inclinés suivant la direction axiale délimitant entre eux une rainure 10a destinée à recevoir une patte 9 en position d'accrochage.

La pièce 3 comporte de plus une lèvre annulaire souple 8 dirigée vers l'intérieur et destinée à venir en contact avec la face frontale de l'embout rigide 1, lorsque le dispositif de jonction est assemblé, comme représenté sur les figures 1 et 3.

Le montage du dispositif de jonction représenté sur les figures 1, 2 et 3 peut être réalisé de manière extrêmement rapide et extrêmement simple par simple engagement de la pièce 3 dans l'extrémité de l'embout rigide 1, de manière à placer en coïncidence avec chacun des doigts 9 une partie en saillie 10 de la pièce 3.

Le passage de la griffe 9a au-dessus de la partie en saillie 10 correspondante est facilité par l'inclinaison des parties latérales de la saillie. Lorsque la pièce 3 est entièrement engagée dans l'embout 1, comme représenté sur la figure 1, les griffes 9a viennent en appui sur les faces arrières des parties en saillie 10 correspondantes de la pièce 3 et assurent ainsi la fixation de la pièce 3 et du raccord souple 2 sur l'embout 1, par clippage.

Chacune des pattes 9 est logée dans un dégagement 10a correspondant d'une partie en saillie 10.

La lèvre souple 7 de forme annulaire et en légère saillie vers l'extérieur se déforme très légèrement à l'intérieur de l'alésage 6 du raccord 1 et vient en appui contre la surface de cet alésage 6.

Comme indiqué plus haut, la lèvre souple 8 est dans une position axiale telle qu'elle vienne en appui contre la face frontale de l'embout 1, lorsque la pièce 3 est entièrement engagée dans l'embout 1, comme représenté sur les figures 1 et 3.

Lorsque du fluide sous pression remplit le circuit de refroidissement, la pression de ce fluide s'exerce sur la surface intérieure de la lèvre 7 qui est ainsi appliquée sur la surface de l'alésage 6, de manière d'autant plus étanche que la pression est plus élevée dans le circuit de refroidissement.

Lorsque le circuit est en dépression, c'est-à-dire à une pression inférieure à la pression atmosphérique externe, la lèvre 8 est appliquée par la pression atmosphérique sur la face frontale de l'embout rigide 1.

L'étanchéité du dispositif de jonction est donc assurée que le circuit de refroidissement soit en pression ou en dépression.

Le remplissage du circuit de refroidissement du véhicule en usine est généralement réalisé "sous vide", c'est-à-dire qu'on établit une pression réduite dans le circuit avant son remplissage par le liquide de refroidissement. Au cours du remplissage, on passe d'une phase où le circuit est en dépression à une phase où le circuit est en pression, si bien que, momentanément, l'étanchéité n'est assurée ni par la lèvre 7 ni par la lèvre 8 et que quelques gouttes de liquide peuvent s'écouler en dehors du circuit. Cet inconvénient est très faible dans la mesure où l'écoulement est très limité et ne se produit qu'une fois lors du remplissage du circuit sur la chaîne de montage.

L'étanchéité du circuit pendant l'utilisation du véhicule reste par la suite toujours excellente, la lèvre 7 soumise à la pression du fluide venant s'appliquer contre l'alésage intérieur de l'embout, cependant que les pattes d'accrochage 9 évitent tout déplacement en translation axiale de la pièce 3 et du raccord 2 par rapport à l'embout.

En outre, le montage est réalisé de manière très simple et très rapide sans utiliser d'outillages et de pièces complémentaires, le raccord souple 2 étant équipé de la pièce 3 au moment de sa fabrication.

Sur les figures 4, 5 et 6 on voit un second mode de réalisation d'un dispositif de jonction suivant l'invention entre un raccord souple 12 constitué par un conduit d'un circuit de refroidissement d'un véhicule automobile et un embout rigide 11 solidaire du radiateur du véhicule.

L'extrémité du conduit 12 est solidaire d'une pièce en matière plastique 13 qui peut être par exemple surmoulée sur l'extrémité du conduit 12.

L'embout rigide 11 comporte une partie d'extrémité annulaire d'engagement profilée 11a et délimite un alésage 16 élargi diamétralement et un logement annulaire 16' dans lequel est engagée une lèvre souple tubulaire 17 formée à la partie interne de la pièce 13.

L'embout rigide 11 comporte également trois épanouissements radiaux 14 disposés à 120° et délimitant chacun une rainure 14a pour l'engagement d'une patte flexible 15 terminée par un doigt 15a en saillie radiale vers l'intérieur prolongeant axialement la pièce 13 à son extrémité de raccordement.

La pièce 13, de forme tubulaire, comporte un logement annulaire 18 dans une disposition coaxiale et placé autour de la lèvre tubulaire 17.

Une lèvre souple annulaire 20 est disposée en saillie radiale vers l'intérieur par rapport à la surface extérieure du logement annulaire 18.

Le raccordement du dispositif de jonction est réalisé en engageant la pièce 13 sur l'extrémité de l'embout rigide 11, de manière que la partie 11a de cet embout 11 pénètre dans le logement annulaire 18.

La lèvre 20 vient alors en appui sur la surface extérieure de l'embout 11. Simultanément la lèvre 17 pénètre dans le logement annulaire 16' et vient en contact par sa partie périphérique externe légèrement en saillie vers l'extérieur, avec la surface extérieure du logement 16'.

La pièce 13 est engagée sur l'embout, de manière que les pattes 15 et les doigts 15a viennent coopérer avec une partie en saillie 14 de l'embout dont les parties latérales sont inclinées dans la direction de l'axe, jusqu'au moment où les doigts flexibles 15a viennent en contact avec la face arrière de la partie en saillie 14 opposée à l'extrémité d'engagement de l'embout 11. La pièce 13 et le raccord souple 12 sont alors maintenus par clippage sur l'embout rigide 11.

La lèvre 17 assure l'étanchéité de la jonction lorsque le circuit renferme un fluide à une pression supérieure à la pression atmosphérique.

La lèvre 20 assure l'étanchéité du dispositif de jonction lorsque le circuit de refroidissement est en dépression.

Comme précédemment, il peut se produire un très léger écoulement de liquide au moment du remplissage du circuit sous vide, sur la chaîne de montage.

Les avantages du dispositif selon le second mode de réalisation, en ce qui concerne sa facilité et sa rapidité de montage, sont identiques à ceux du dispositif selon le premier mode de réalisation.

Sur les figures 7, 8, 9 et 10, on a représenté un troisième mode de réalisation d'un dispositif de jonction suivant l'invention permettant de relier de manière étanche un conduit souple 22 du circuit de refroidissement d'un véhicule automobile à un embout rigide 21 solidaire du radiateur de ce véhicule, par l'intermédiaire d'une pièce 23 solidaire de l'extrémité du raccord souple 22.

L'embout rigide 21 comporte une partie d'extrémité délimitant un alésage 26 élargi diamétralement et prolongé par un logement annulaire 24 délimité entre deux parties tubulaires coaxiales du raccord 21.

L'embout 21 comporte une partie d'extrémité à diamètre élargi entourant le logement 24 et l'alésage 26 et délimitée sur sa face arrière par une surface d'appui 25. La partie élargie comporte trois saillies radiales inclinées 27 dirigées vers l'extérieur, disposées à 120° autour de l'axe de l'embout rigide, et délimitant chacune un dégagement 27a.

La pièce 23 en matière plastique qui est fixée à l'extrémité du raccord souple 22, par exemple par surmoulage, comporte une partie d'extrémité intérieure constituée par une chemise annulaire 28 portant deux joints d'étanchéité annulaires 29 et 30 dirigés respectivement vers l'extérieur et vers l'intérieur de la chemise annulaire 28 et constituant avec la chemise 28 des joints à lèvre souple.

Lorsque la chemise 28 est introduite dans le logement annulaire 24, le joint extérieur 29 est en contact avec la paroi extérieure du logement 24 et le joint à lèvre 30 avec la paroi intérieure de ce logement 24.

La pièce 23 comporte trois pattes 31 de direction axiale disposées à 120° les unes des autres et terminées par des doigts 31a en saillie radiale vers l'intérieur.

Le montage du dispositif de jonction peut être effectué comme précédemment, par simple engagement de la pièce 23 solidaire de l'extrémité du raccord souple 22 sur l'extrémité de l'embout rigide 21.

La pièce 23 est orientée de manière que les pattes 31 soient placées en concordance avec les parties en saillie 27 de l'embout rigide 21.

L'extrémité des doigts 31a constituant une rampe inclinée rentre en contact avec les parties en saillie 27 également inclinées, ce qui provoque un écartement des pattes 31 qui présentent une certaine flexiblité. On réalise l'assemblage par glissement de la pièce 23 sur le raccord rigide 21 jusqu'au moment où les doigts 31a viennent se rabattre en contact avec la surface arrière 25 de la partie à grand diamètre de l'embout 21. La pièce 23 et le raccord souple 22 sont alors fixés par clippage sur l'embout rigide 21.

Pendant l'engagement de la pièce 23 sur l'extrémité de l'embout rigide 21, la chemise tubulaire 28 pénètre dans le logement annulaire 24 et les joints 29 et 30 viennent en contact avec les surfaces intérieure et extérieure de cet espace annulaire, respectivement.

Le joint 29 et le joint 30 constituent avec la chemise 28 des joints à lèvres souples.

Le joint 29 disposé vers l'extérieur de l'embout 21 est appliqué d'autant plus fortement sur la surface correspondante du raccord rigide 21 que la pression est plus forte dans le circuit de refroidissement, ce qui accroît l'étanchéité, lorsque la pression augmente dans le circuit.

Le joint 30 est appliqué sur la surface intérieure du logement annulaire 24, lorsque le circuit est en dépression, c'est-à-dire lorsque sa pression interne est inférieure à la pression atmosphérique.

Le joint 30 est donc susceptible d'assurer l'étanchéité de la jonction, lorsque le circuit de refroidissement est en dépression.

La chemise annulaire 28 joue le rôle de lèvre souple dans l'un et l'autre cas.

Le fonctionnement général du dispositif de jonction suivant le troisième mode de réalisation est sensiblement identique au fonctionnement du dispositif selon le premier et le second modes de réalisation.

Les pattes 31 et les doigts 31a engagés sur les parties en saillie 27 du raccord 21 réalisent une fixation par clippage du raccord souple par rapport à l'embout rigide, de manière que ces éléments ne puissent se déplacer dans la direction axiale, l'un par rapport à l'autre. Les pattes 31 sont logées dans les dégagements 27a et les doigts 31a coopèrent avec la face arrière 25 du raccord rigide 21.

L'engagement des doigts 31a sur les parties en saillie 27 est favorisé par la surface inclinée de ces doigts suivant une pente sensiblement identique à la pente de la surface supérieure des parties en saillie 27 constituée sous la forme d'une rampe inclinée.

Sur la figure 10, on voit une première variante de réalisation des joints 29 et 30 qui sont disposés à l'extrémité de la chemise annulaire 28 sous la forme d'un rebord torique dont la section est en forme de demi-lune.

Sur la figure 10a, on voit une seconde variante de l'ensemble d'étanchéité, cet ensemble associant des joints 29, 30 tels que représentés sur la figure 10, à l'extrémité de la chemise 28 et des joints 29', 30' placés parallèlement aux joints 29 et 30, à une certaine distance dans la direction axiale.

Sur la figure 10b, on a représenté une troisième variante de réalisation des joints 29 et 30 qui sont alors constitués par des joints toriques ayant une section semi-circulaire, solidaires de la surface intérieure et de la surface extérieure de la chemise 28, respectivement.

Le dispositif suivant l'invention peut être monté très rapidement et très facilement sans utiliser d'outillages ou de pièces complémentaires, en plus de l'embout rigide et du raccord souple solidaire d'une pièce de raccordement monobloc. Le montage peut être effectué très rapidement et de façon très sûre et l'étanchéité du dispositif reste excellente aussi bien lorsque le circuit est sous pression que lorsque le circuit est en dépression.

L'invention ne se limite pas aux modes de réalisation qui ont été décrits.

C'est ainsi qu'on peut imaginer d'autres formes d'embout rigide et d'autres formes de pièce de raccordement à l'extrémité du raccord souple.

Les éléments d'accrochage complémentaires sur le raccord rigide et sur la pièce de raccordement peuvent avoir des formes quelconques.

De même, les joints à lèvre d'étanchéité en pression et en dépression peuvent avoir des formes différentes de celles qui ont été décrites et être disposés de manière différente.

Enfin, l'invention s'applique non seulement à un circuit de refroidissement d'un véhicule automobile mais encore à tout circuit destiné à recevoir en service un fluide sous pression et comportant des raccords souples, par exemple en caoutchouc, qui sont assemblés à des embouts rigides tubulaires.

## Revendications

1. Dispositif de jonction entre un raccord tubulaire souple (2, 12, 22) et un embout tubulaire rigide (1, 11, 21), dans un circuit contenant, en service, un fluide sous pression tel que le circuit de refroidissement d'un véhicule automobile, l'étanchéité de la jonction étant assurée en service par la pression du fluide s'exerçant sur une extrémité de jonction du raccord souple en contact avec l'embout rigide, caractérisé par le fait qu'il comporte une pièce de raccordement solidaire du raccord souple à son extrémité de jonction (3, 13, 23) comportant :

- une première lèvre d'étanchéité annulaire souple (7, 17, 29) destinée à venir à l'intérieur de l'embout rigide sur laquelle s'applique la pression du fluide en service pour son application étanche contre la surface intérieure de l'embout rigide (1, 11, 21),
- une seconde lèvre d'étanchéité annulaire souple (8, 20, 30), en contact avec la surface de l'embout rigide (1, 11, 21) sur lequel elle est appliquée de manière étanche, lorsque le circuit est en dépression par rapport à l'atmosphère extérieure,
- et des moyens d'accrochage de la pièce de raccordement (10, 15, 15a, 31, 31a) sur des moyens correspondants (9, 9a, 14, 27) de l'embout rigide.

2. Dispositif de jonction suivant la revendication 1, caractérisé par le fait que les moyens d'accrochage sont constitués par des pattes de clippage (9) disposées suivant la direction axiale de l'embout rigide (1) portant à leur extrémité des doigts d'accrochage (9a) saillant radialement vers l'intérieur et par des parties en saillie radiale vers l'extérieur (10) de la pièce de raccordement (3) comportant des surfaces inclinées dans la direction axiale.

3. Dispositif de jonction suivant la revendication 1, caractérisé par le fait que les moyens d'accrochage sont constitués par des pattes (15, 31) portant à leur extrémité des doigts (15a, 31a) en saillie radiale vers l'intérieur, disposées suivant la direction longitudinale de la pièce de raccordement (13, 23) et par des parties (14, 27) en saillie radiale vers l'extérieur de l'embout rigide (11, 21).

4. Dispositif de jonction suivant l'une quelconque des revendications 1, 2 et 3, caractérisé par le fait qu'une partie au moins de la pièce de raccordement (3) comportant la première lèvre d'étanchéité souple (7) est engagée à l'intérieur d'un alésage (6) du raccord rigide (1).

5. Dispositif de jonction suivant la revendication 4, caractérisé par le fait que la seconde lèvre d'étanchéité annulaire (8) vient en contact avec une partie d'extrémité frontale (8') de l'embout rigide (1).

6. Dispositif de jonction suivant l'une quelconque des revendications 1, 2 et 3, caractérisé par le fait que l'embout rigide (11) comporte un logement annulaire (16') coaxial à l'embout ouvert vers l'extrémité de l'embout destiné à recevoir la première lèvre d'étanchéité (17).

7. Dispositif de jonction suivant la revendication 6, caractérisé par le fait que la pièce de raccordement (13) comporte un logement annulaire (18) ouvert à son extrémité destiné à recevoir une partie d'extrémité de l'embout rigide tubulaire (11).

8. Dispositif de jonction suivant la revendication 7, caractérisé par le fait que la seconde lèvre d'étanchéité annulaire (20) est disposée à l'intérieur du logement annulaire (18) pour venir en contact avec la surface extérieure de la partie d'extrémité de l'embout rigide (11).

9. Dispositif de jonction suivant l'une quelconque des revendications 1, 2 et 3, caractérisé par le fait que l'embout rigide (21) comporte un logement annulaire (24) coaxial à l'embout rigide et ouvert vers l'extérieur destiné à recevoir une chemise annulaire (28) portant un premier joint d'étanchéité annulaire (29) et un second joint d'étanchéité annulaire (30) destinés à venir en contact avec la surface extérieure et avec la surface intérieure respectivement du logement annulaire (24).

## Patentansprüche

1. Verbindungseinrichtung zwischen einem Schlauchverbindungsstück (2,12,22) und einem starren Rohrende (1,11,21) in einem Kreislauf, der im Betrieb ein Druckfluid enthält, wie beispielsweise dem Kühlmittelkreislauf eines Kraftfahrzeugs, bei der die Dichtheit der Verbindung im Betrieb durch den Fluiddruck sichergestellt wird, der auf ein mit dem starren Rohrende in Berührung stehendes Anschlußende des Schlauchverbindungsstückes wirkt, dadurch **gekennzeichnet**, daß sie ein Übergangsstück an dem Anschlußende (3,13,23) des Schlauchverbindungsstückes aufweist, mit
– einer ersten flexiblen, ringförmigen Dichtlippe (7,17,29), die in das Innere des starren Rohrendes eintritt und auf die im Betrieb der Fluiddruck wirkt, um sie dicht gegen die Innenfläche des starren Rohrendes (1,11,21) anzudrücken,
– einer zweiten flexiblen, ringförmigen Dichtlippe (8,20,30) in Berührung mit der Oberfläche des starren Rohrendes (1,11,21), gegen die sie dicht angedrückt wird, wenn der Kreislauf unter Unterdruck in Bezug auf den äußeren Atmosphärendruck steht,
– und Mitteln (10,15,15a,31,31a) zur Verankerung des Übergangsstücks an entsprechenden Mitteln (9, 9a, 14, 27) des starren Rohrendes.

2. Verbindungseinrichtung nach Anspruch 1, dadurch **gekennzeichnet,** daß die Verankerungsmittel gebildet werden durch Halteklauen (9), die in Axialrichtung des Rohrendes (1) angeordnet sind und an ihrem Ende radial nach innen vorspringende Haltefinger (9a) tragen, und durch radial nach außen vorspringende Teile (10) des Übergangsstücks (3), die in Axialrichtung geneigte Oberflächen aufweisen.

3. Verbindungseinrichtung nach Anspruch 1, dadurch **gekennzeichnet,** daß die Verankerungsmittel gebildet werden durch Halteklauen (15,31), die an ihrem Ende radial nach innen vorspringende Haltefinger (15a,31a) tragen und in Längsrichtung des Übergangsstücks (13,23) angeordnet sind, und durch radial nach außen vorspringende Teile (14,27) des starren Rohrendes (11,21).

4. Verbindungseinrichtung nach einem der Ansprüche 1 bis 3, dadurch **gekennzeichnet,** daß zumindest ein Teil des Ubergangsstückes (3), der die erste flexible Dichtlippe (7) aufweist, in das Innere einer Aufbohrung (6) des starren Rohrendes (1) eingreift.

5. Verbindungseinrichtung nach Anspruch 4, dadurch **gekennzeichnet,** daß die zweite ringförmige Dichtlippe (8) mit einem stirnseitigen Endbereich (8') des starren Rohrendes (1) in Berührung tritt.

6. Verbindungseinrichtung nach einem der Ansprüche 1 bis 3, dadurch **gekennzeichnet,** daß das starre Rohrende (11) eine zu dem Rohrende koaxiale und zu dessen Ende offene ringförmige Aufnahme (16') für die erste Dichtlippe (17) aufweist.

7. Verbindungseinrichtung nach Anspruch 6, dadurch **gekennzeichnet,** daß das Übergangsstück (13) eine an seinem Ende offene ringförmige Aufnahme (18) für einen Endbereich des starren Rohrendes (11) aufweist.

8. Verbindungseinrichtung nach Anspruch 7, dadurch gekennzeichnet, daß die zweite ringförmige Dichtlippe (20) im Inneren der ringförmigen Aufnahme (18) angeordnet ist, so daß sie mit der Außenfläche des Endbereichs des starren Rohrendes (11) in Berührung kommt.

9. Verbindungseinrichtung nach einem der Ansprüche 1 bis 3, dadurch **gekennzeichnet,** daß starre Rohrende (21) eine zu dem starren Rohrende koaxiale und nach außen offene ringförmige Aufnahme (24) aufweist, die dazu eingerichtet ist, einen ringförmigen Mantel (28) aufzunehmen, der eine erste ringförmige Dichtung (29) und eine zweite ringförmige Dichtung (30) trägt, die mit der äußeren sowie mit der inneren Oberfläche der ringförmigen Aufnahme (24) in Berührung tritt.

## Claims

1. A junction device between a flexible tubular connection (2, 12, 22) and a rigid tubular joining piece (1, 11, 21) in a circuit containing a pressurized fluid in operation, such as the cooling circuit of an automotive vehicle, the sealing-tightness of the junction being ensured during operation by the pressure of the fluid exerted on a junction end of the flexible connection in contact with the rigid joining piece, characterized in that it comprises a connecting member (3, 13, 23) connected to the flexible connection at its junctionend and comprising:
– a first flexible annular sealing lip (7, 17, 29) which is adapted to enter the rigid joining piece and to which the pressure of the fluid is applied during operation for its sealing-tight application against the inner surface of the rigid joining member (1, 11, 21),
– a second flexible annular sealing lip (8, 20, 30) in contact with the surface of the rigid joining piece (1, 11, 21), to which it is applied in sealing-tight manner when the circuit is under negative pressure in relation to the outside atmosphere,
– and means for attaching the connecting member (10, 15, 15a, 31, 31a) to corresponding means (9, 9a, 14, 27) of the rigid joining piece.

2. A junction device according to claim 1, characterized in that the attaching means are formed by clipping lugs (9) disposed in the axial direction of the rigid joining piece (1) and bearing at their ends radially inwardly projecting attaching pins (9a), and by radially outwardly projecting portions (10) of the connecting member (3) comprising surfaces inclined in the axial direction.

3. A junction device according to claim 1, characterized in that the attaching means are formed by lugs (15, 31) which bear at their ends radially inwardly projecting fingers (15a, 31a) and which are disposed in the longitudinal direction of the connecting member (13, 23), and by radially outwardly projecting portions (14, 27) of the rigid joining piece (11, 21).

4. A junction device according to any of claims 1, 2 and 3, characterized in that at least a portion of the connecting member (3) comprising the first flexible sealing lip (7) engages inside a bore (6) in the rigid joining piece (1).

5. A junction device according to claim 4, characterized in that the second annular sealing lip (8) contacts a front end portion (8') of the rigid joining piece (1).

6. A junction device according to any of claims 1, 2 and 3, characterized in that the rigid joining piece (11) comprises an annular recess (16') coaxial with the joining piece and opening towards the end thereof and adapted to receive the first sealing lip (17).

7. A junction device according to claim 6, characterized in that the connecting member (13) comprises an annular recess (18) open at its end and adapted to receive an end portion of the rigid tubular joining piece (11).

8. A junction device according to claim 7, characterized in that the second annular sealing lip (20) is disposed inside the annular opening (18) to contact the outer surface of the end portion of the rigid joining piece (11).

9. A junction device according to any of claims 1, 2 and 3, characterized in that the rigid joining piece (21) comprises an annular recess (24) coaxial with the rigid joining piece and open towards the outside thereof and adapted to receive an annular jacket (28) bearing a first annular sealing joint (29) and a second annular sealing joint (30) which are adapted to contact the outer surface and the inner surface of the annular recess (24) respectively.

FIG1

FIG.2

FIG.3

FIG.4

FIG.5

FIG.6

EP 0 360 634 B1

FIG7

FIG.8

FIG.9

FIG.10

FIG.10a

FIG.10b